# FASCICULE DE BREVET EUROPEEN

(11) **EP 1 154 607 B1**
(45) Date de publication et mention de la délivrance du brevet: **26.10.2005**
(21) Numéro de dépôt: 01109269.9
(22) Date de dépôt: 14.04.2001
(51) Int. Cl.: H04L 27/26, H04L 5/02, H04L 5/14

(54) **Annulation de signaux perturbants dans un récepteur de modem xDSL**
Beseitigung von Störungssignalen in einem xDSL Empfängermodem
Cancellation of interfering signals in an xDSL receiving modem

(30) Priorité: 02.05.2000 FR 0005681
(43) Date de publication de la demande: 14.11.2001
(73) Titulaire: SAGEM S.A., 75015 Paris (FR)
(72) Inventeur: Samy, Roger, M., 77150 Lesigny (FR)
(74) Mandataire: Lapoux, Roland

(56) Documents cités:
- WO-A-00/21228
- WO-A-98/10528

## Description

La présente invention concerne d'une manière générale les interférences générées par des signaux, dits signaux perturbateurs, se propageant dans des lignes de transmission, dans un signal dit signal perturbé se propageant dans une ligne de transmission s'étendant au voisinage desdites lignes de transmission.

Plus particulièrement, l'invention s'intéresse à de telles interférences lorsque le signal perturbé est en mode xDSL, typiquement ADSL (Asymmetric Digital Subscriber Line), transmis dans une ligne d'usager entre deux modems situés respectivement devant une installation terminale d'usager et un central, et lorsque la ligne d'usager côtoie, voire est accolée à d'autres lignes d'usager transmettant des signaux perturbateurs en mode xDSL, par exemple en mode HDSL. En effet, les interférences émanant des signaux perturbateurs affectent la qualité du signal perturbé reçu dans chaque modem dans lequel le débit des signaux échangés avec le modem distant est adapté dynamiquement à la qualité du signal reçu mesurée en permanence. Plus les signaux perturbants seront prépondérants dans le signal reçu perturbé, plus le débit sera diminué, et également plus la portée des signaux est réduite.

Dans ces conditions, le débit maximum annoncé pour des communications xDSL par l'opérateur téléphonique de la ligne d'usager est rarement maintenu, ce qui est d'autant plus désavantageux pour la voie descendante dans la ligne d'usager qui doit assurer une transmission avec un débit élevé notamment pour des messages internet. Une solution pour améliorer la qualité des signaux reçus est décrit dans WO 98/10528.

La présente invention vise à remédier aux inconvénients précédents dûs aux perturbations de signaux xDSL apportées dans un signal perturbé xDSL afin qu'un opérateur téléphonique puisse garantir une bonne qualité de transmission dans une ligne d'usager transmettant le signal xDSL et ainsi un débit élevé de celui-ci.

A cette fin, un procédé pour annuler des signaux perturbants émanant de signaux perturbateurs, typiquement en un mode quelconque xDSL, compris dans une bande de fréquence prédéterminée, dans un signal perturbé à multiporteuse, typiquement en mode ADSL, est caractérisé en ce que, au cours d'une phase d'initialisation, des signaux perturbants sont recueillis sur des porteuses de sous-bandes de fréquence du signal perturbé comprises dans la bande de fréquence prédéterminée, les signaux perturbants étant recueillis ensemble sur chaque porteuse lorsqu'uniquement celle-ci ne supporte aucune donnée, des densités spectrales de puissance des signaux recueillis sont calculées, et un filtre numérique est estimé en fonction d'un gabarit de fréquence déduit des densités spectrales calculées, et au cours d'une phase de communication de données, le signal perturbé est filtré par ledit filtre pour y extraire des signaux perturbants qui sont soustraits au signal perturbé.

Selon une réalisation préférée, les signaux perturbants sont recueillis après que le signal perturbé à multiporteuse ait subi une transformée de Fourier numérique dans une largeur de bande de fréquence recouvrant au moins la bande de fréquence des signaux perturbateurs, par exemple celle d'un signal HDSL. Des densités spectrales de puissance dans des sous-bandes de porteuse comprises dans la bande de fréquence du signal perturbé à multiporteuse et n'appartenant pas à la bande de fréquence prédéterminée des signaux perturbateurs sont alors interpolées en fonction des densités spectrales calculées afin d'estimer le filtre en fonction des densités spectrales calculées et interpolées.

L'invention concerne également un modem du type ADSL et particulièrement un récepteur de ce modem recevant depuis une ligne de transmission un signal à multiporteuse qui est perturbé par des signaux perturbants émanant de signaux perturbateurs en mode xDSL compris dans une bande de fréquence prédéterminée et se propageant dans des lignes de transmission voisines de ladite ligne de transmission. Le récepteur du modem est caractérisé en ce qu'il comprend un moyen pour annuler les signaux perturbants dans le signal perturbé à multiporteuse reçu conformément au procédé ci-dessus selon l'invention.

En accord avec la réalisation préférée, le moyen pour annuler est interconnecté entre un transformateur de Fourier du signal perturbé à multiporteuse reçu et un décodeur.

De préférence, le moyen pour annuler comprend un moyen pour estimer un filtre numérique en fonction d'un gabarit de fréquence déduit de densités spectrales calculées pour des signaux perturbants recueillis sur des porteuses de sous-bandes de fréquence dans le signal perturbé reçu au moins comprises dans la bande de fréquence prédéterminée pendant une phase d'initialisation du modem, et un moyen pour soustraire des signaux perturbants extraits par ledit filtre au signal perturbé pendant une phase de communication de données du modem.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme fonctionnel d'un modem ADSL-DMT incluant un dispositif d'annulation de signaux perturbateurs selon l'invention ;
- la figure 2 est un diagramme de densité spectrale de puissance (DSP) en fonction de la fréquence pour illustrer des bandes de fréquence selon les sens montant et descendant dans des voix d'émission et de réception du modem ADSL-DMT et la bande de fréquence d'un modem HDSL ;
- la figure 3 est une représentation modélisée de la diaphonie résolue par le dispositif d'annulation d'interférence selon l'invention, inclus dans le récepteur du modem ADSL-DMT ; et
- la figure 4 est un algorithme d'estimation de filtre de signaux perturbateurs pendant une phase d'initialisation de fonctionnement du modem, selon l'invention.

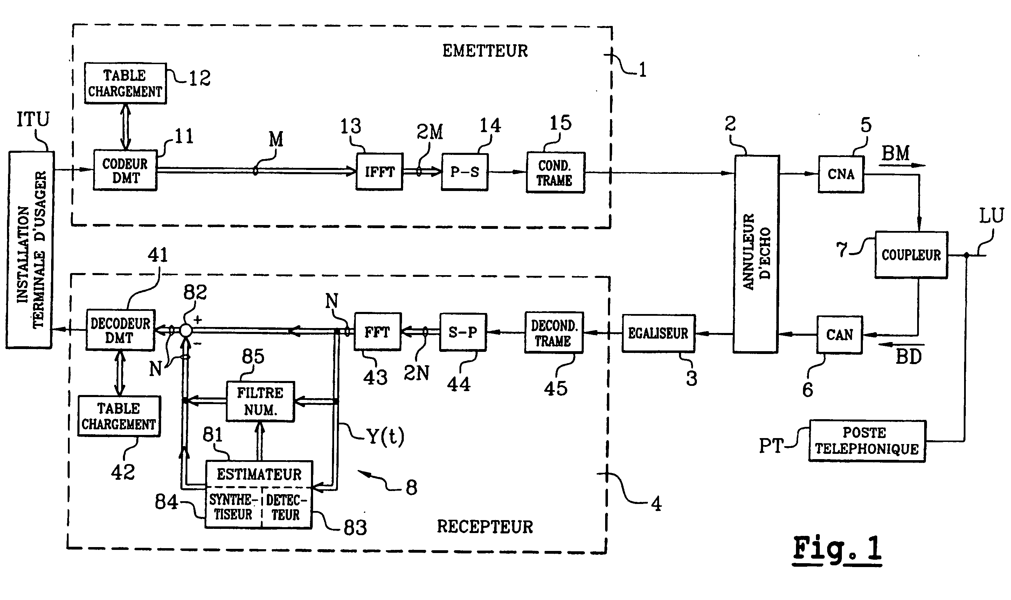

En référence à la figure 1, un modem ADSL (Asymmetric bitrate Digital Subscriber Line) avec modulation à multiporteuse discrète DMT (Discret MultiTone) comprend essentiellement un émetteur 1 entre une entrée de données recevant des données d'une installation terminale d'usager numérique ITU et la voie d'émission d'un annuleur d'écho 2, et un égaliseur auto-adaptatif 3 et un récepteur 4 entre une voie de réception de l'annuleur d'écho 2 et une sortie de données vers l'installation terminale d'usager ITU. Le modem comprend également un convertisseur numérique-analogique (CNA) 5 et un convertisseur analogique-numérique (CAN) 6 respectivement entre d'une part la sortie de la voie d'émission et l'entrée de la voie de réception de l'annuleur d'écho 2 et d'autre part un coupleur 2 fils/4 fils 7, tel qu'un transformateur différentiel, relié à une ligne téléphonique d'usager LU constituée par une paire torsadée de fils conducteurs.

Par exemple, l'installation terminale ITU comprend un micro-ordinateur ou un serveur d'un réseau local LAN, et est associée à au moins un poste téléphonique analogique classique PT relié à la ligne LU devant le coupleur 7.

Dans la suite de la description, des valeurs numériques de grandeurs physiques sont indiquées seulement à titre d'exemple, indépendamment de toute limitation de la portée de la présente demande de brevet.

- Dans l'émetteur 1, un codeur 11 effectue notamment un codage du signal numérique transmis par l'installation d'usager ITU en fonction de la modulation à multiporteuse DMT qui met en oeuvre une modulation à multiplexage de fréquence orthogonal codée COFDM (Coded Orthogonal Frequency Division Multiplex). Ainsi dans la voie montante depuis l'installation ITU vers la ligne LU, un message à bas débit est divisé en des trames numériques modulant plusieurs porteuses en parallèle équiréparties dans une bande de fréquence "montante" BM en partie inférieure à la bande de fréquence totale réservée à la transmission ADSL et s'étendant jusqu'à Fmax = 4,3125 x 256 = 1104 kHz.

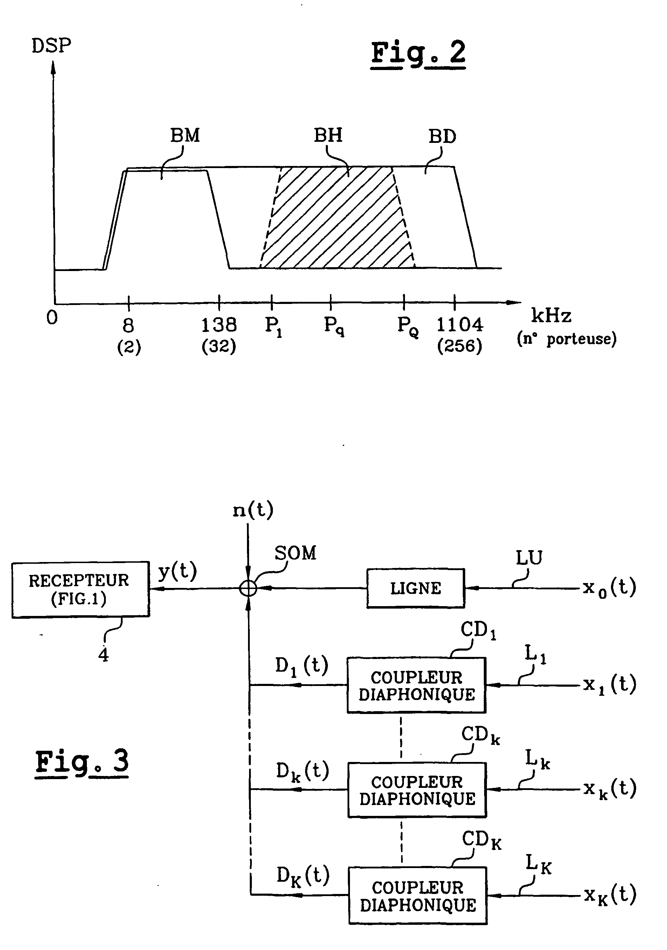

Typiquement, comme montré à la figure 2, N+1 = 256 sous-bandes de largeur Δf = 4,3125 kHz sont équiréparties dans la bande réservée, et M=30 sous-bandes sont comprises dans la bande de fréquence montante BM s'étendant de 8,52 à 32 Δf = 138 kHz. Les fréquences inférieures à 2 Δf = 8,62 kHz sont disponibles pour la transmission analogique de voix en bande de base pour le poste téléphonique PT. Chaque sous-bande supporte une modulation d'amplitude de deux porteuses en quadrature du type 2^{b}QAM, avec b désignant le nombre de bits compris entre 2 et B=8 par symbole de modulation correspondant à une constellation de 4 à 256 symboles complexes.

En pratique, le codeur 11 est dépendant d'une table de chargement de bit 12 qui adapte plus ou moins le débit du message à répartir sur les porteuses des sous-bandes par palier de 32 kbit/s par exemple, c'est-à-dire qui adapte la rapidité de modulation définie par l'entier b, en fonction de l'analyse du rapport signal à bruit lors de la phase d'initialisation/négociation du modem, après échange de signaux de mesure entre ce modem et un modem ADSL-DMT distant au niveau du central de raccordement avec lequel il prépare une communication et en fonction du débit alloué à la liaison pour la communication depuis le modem dans un réseau à haut débit tel que le réseau internet. Plus le rapport signal à bruit est élevé, plus le nombre de points dans la constellation QAM par porteuse peut être élevé. En pratique, une porteuse supporte au plus 15 bits par période, ce qui impose un débit maximum du 15 x Δf = 64,7 kbit/s par porteuse ; typiquement le débit selon le sens montant est variable entre 16 et 640 kbit/s.

Le codeur 11 fournit M trains numériques parallèles à un transformateur de Fourrier inverse à M points 13, avec M < N. Le transformateur 13 réalise la modulation multiporteuse par une transformation de Fourrier rapide inverse (IFFT) transformant une série de M symboles de modulation parallèles en un symbole OFDM à M couples de porteuses en quadrature, soit 2M symboles de modulation complexes et leurs conjugués, qui sont mis en série dans un convertisseur parallèle-série 14.

Puis le signal ainsi concaténé à la sortie du convertisseur 14 est mis en trame en lui ajoutant périodiquement un préfixe de verrouillage de trame pour chaque symbole multiporteuse OFDM dans un conditionneur de trame 15. Le signal tramé est transmis classiquement par l'émetteur 1 dans la ligne LU après traversée de la voie d'émission de l'annuleur d'écho 2 et conversion en signal analogique dans le convertisseur numérique-analogique 5.

Suivant le sens descendant de la ligne téléphonique d'usager LU vers l'installation terminale d'usager ITU, le signal analogique reçu comprend des symboles OFDM répartis chacun sur au plus les N = 255 sous-bandes de largeur Δf = 4,3125 kHz, dans une bande de fréquence "descendante" BD entre 4,3125 kHz et 1104 kHz, confondue avec la bande réservée à la transmission ADSL, comme montré à la figure 2. Typiquement, le débit selon le sens descendant est inférieur au débit maximum théorique, 255 Δf = 1,01 Mbit/s, soit inférieur à 8,2 Mbit/s.

Le signal analogique reçu à symboles OFDM est converti en un signal numérique reçu dans le convertisseur analogique-numérique 6 et est corrigé dans l'annuleur d'écho 2 pour minimiser principalement l'écho électrique dans la ligne LU. Puis le signal numérique reçu est appliqué au récepteur 4 à travers l'égaliseur auto-adaptatif 3 qui compense en permanence la distorsion d'amplitude dans le canal de transmission constitué par la ligne LU entre les deux modems ADSL en communication.

Le récepteur 4 offre des blocs fonctionnels 41 à 45 réciproques de ceux 11 à 15 dans l'émetteur 1. Le récepteur 4 comprend en cascade, depuis la sortie de l'égaliseur 7, un déconditionneur de trame 45 qui retire les préfixes de trame dans le signal numérique reçu, un convertisseur série-parallèle 44 qui produit des symboles OFDM à 2N composantes, un transformateur de Fourrier rapide (FFT) 43 qui réalise la démodulation multiporteuse en transformant chaque symbole OFDM en N = 255 symboles de modulation de porteuse, et un décodeur DMT 41. Selon la technique antérieure, les N sorties du transformateur 43 sont reliées directement aux N entrées du décodeur DMT 41 respectivement. Le décodeur 41 effectue principalement une démodulation de chacune des N porteuses suivant la modulation 2^{b}QAM et donc selon le débit négocié avec le modem ADSL distant. Les caractéristiques de la démodulation correspondante sont mémorisées dans une mémoire de table de chargement 42 associée au décodeur 41. En sortie du décodeur sont récupérés N trains parallèles de b éléments binaires qui sont sérialisés pour les transmettre à l'installation terminale ITU.

En pratique, les fonctionnalités de l'émetteur 1 et du récepteur 4 sont implémentées sous forme de logiciel dans une mémoire programmable EEPROM associée à un microprocesseur autour duquel le modem est structuré.

Comme montré schématiquement à la figure 3, la ligne d'usager LU s'étend au voisinage de K lignes de transmission d'usager L₁ à L_{K} pour signaux xDSL, par exemple des signaux HDSL (High bitrate DSL) x₁(t) à x_{K}(t), ayant à leurs extrémités des modems HDSL. Une transmission duplex HDSL est symétrique avec un débit pouvant atteindre 2 Mbit/s, un codage en ligne 2B1Q faisant correspondre deux bits à un symbole quaternaire, et une répartition du flux de symbole sur une, deux ou trois lignes de transmission. Le spectre utile d'un signal HDSL est dans une bande de fréquence BH comprise entre 170 et 780 kHz environ, comme indiqué par des hachures dans la figure 2. La bande BH est recouverte par la bande de fréquence descendante BD du signal reçu par le récepteur 4 du modem ADSL, et par conséquent constitue la bande de fréquence commune aux signaux ADSL et HDSL, comprenant Q = 140 porteuses P₁ à P_{Q} de sous-bande, avec Q < N.

A cause de leur proximité par exemple dans un même câble, ou bien dans des câbles s'étendant dans un même conduit souterrain, les signaux HDSL x₁(t) à x_{K}(t) transmis dans les lignes L₁ à L_{K} interfèrent avec le signal ADSL x₀(t) dans la ligne d'usager LU reçue par le récepteur 4. Dans la figure 3, des coupleurs diaphoniques CD₁ à CD_{K} simulent la contribution des signaux perturbateurs x₁(t) à x_{K}(t) par des signaux perturbants de diaphonie D₁(t) à D_{K}(t) qui dans un sommateur SOM s'additionnent au signal ADSL x(t) et à un signal de bruit blanc gaussien prédéterminé n(t) dans la ligne, pour fournir un signal perturbé y(t) réellement reçu par le récepteur 4 du modem ADSL. Tous les signaux précédents sont supposés numériques, t dénotant un instant d'échantillonnage dans le convertisseur 6. Dans le récepteur 4 du modem ADSL, les interférences dues aux signaux de diaphonie D₁(t) à D_{K}(t) dégradent la portée et le débit du signal x_{O}(t) émis par le modem distant ADSL ; la diaphonie est principalement composée de la paradiaphonie engendrée par les signaux perturbateurs HDSL x₁ à x_{K} émis par des modems HDSL à des extrémités de lignes L₁ à L_{K} situées du même côté que le modem en cause ADSL.

Selon l'invention, un dispositif numérique d'annulation de signaux perturbateurs 8 est interconnecté entre les sorties du transformateur de Fourier 43 et les entrées du décodeur DMT 41, comme montré à la figure 1.

Le dispositif d'annulation 8 comprend un estimateur de diaphonie 81 ayant N entrées respectivement reliées aux N sorties du transformateur 43, et un circuit de soustraction 82 ayant N soustracteurs parallèles. Les N soustracteurs ont respectivement des entrées directes reliées aux N sorties du transformateur de Fourier 43, des entrées inverses reliées à N sorties de l'estimateur 81, et N sorties reliées aux entrées du décodeur DMT 41.

L'estimateur 81 comprend un détecteur 83 pour détecter la contribution perturbante D₁(t) à D_{K}(t) des signaux perturbateurs HDSL x₁(t) à x_{K}(t) dans le signal perturbé Y(t) récupéré en sortie du transformateur de Fourier 43, et un synthétiseur de filtre 84 pour calculer la fonction de transfert d'un filtre numérique 85 à partir d'un gabarit en fréquence estimé de la contribution perturbante.

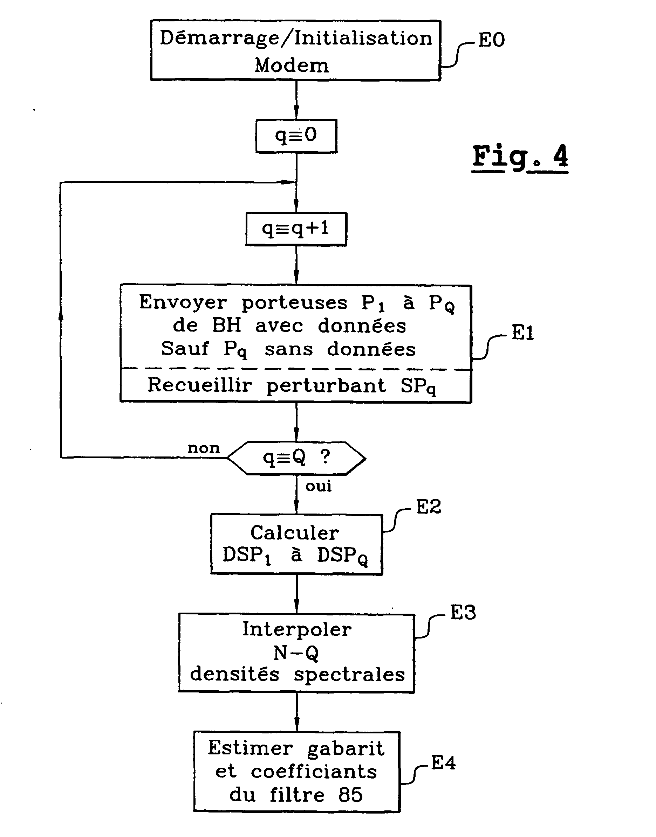

Selon le procédé montré à la figure 4, le calcul du filtre 85 s'effectue après l'étape de démarrage E0 du modem ADSL, et au cours de la phase d'initialisation de fonctionnement du modem et de négociation avec l'autre modem ADSL distant, précédant une communication de données. L'algorithme de la figure 4 est répété avant toute autre nouvelle communication.

Le calcul repose sur la considération que la contribution perturbante D₁(t) à D_{K}(t) des signaux perturbateurs est un processus aléatoire qui est de nature cyclostationnaire à cause de la transformation de Fourier que la contribution perturbante dans le signal Y(t) a subi dans le transformateur 43. Ceci permet de déduire la densité spectrale de puissance (DSP) de la contribution perturbante par transformée de Fourier discrète sur la fonction d'autocovariance de la contribution perturbante.

Le récepteur 4 recueille successivement des signaux perturbateurs sur les Q porteuses P₁ à P_{Q} appartenant à la bande de fréquence BH commune au signal descendant ADSL et aux signaux perturbateurs HDSL. Pour cela à une étape E1, le modem demande au modem distant que ce dernier lui envoie successivement Q signaux à multiporteuse dans la ligne LU selon le sens descendant. Toutes les Q porteuses dans chacun des signaux à multiporteuse successifs supportent des signaux de données d'apprentissage connus de l'estimateur 81, à l'exception de l'une respective Pq des porteuses de la bande commune qui ne supporte aucun signal de données, avec q variant de 1 à Q, pendant une durée prédéterminée DP de plusieurs périodes d'échantillonnage. Ainsi après une durée QxDP, le détecteur 83 a filtré successivement Q signaux "perturbants" SP₁ à SP_{Q} représentant la contribution perturbante des signaux perturbateurs x₁ à x_{K} respectivement dans les sous-bandes de porteuses P₁ à P_{Q}.

A une étape suivante E2, le synthétiseur de filtre 84 calcule par transformée de Fourier discrète la densité spectrale de puissance DSP₁ à DSP_{Q} des Q signaux perturbants. Ceci revient à identifier le spectre des signaux perturbants recueillis, à travers un peigne des N porteuses ADSL. En fonction de ces dernières densités spectrales, N-Q autres densités spectrales de puissance pour les autres sous-bandes dans la bande de fréquence descendante BD sont interpolées à une étape E3.

Puis finalement à une étape E4, le synthétiseur 84 estime un gabarit de filtre en fonction d'un lissage des N densités spectrales de puissance calculées et interpolées, et plus particulièrement évalue les coefficients de la fonction de transfert du filtre numérique 85.

L'estimation peut être par exemple basée sur un algorithme de méthode des moindres carrés LMS en recherchant le maximum de vraisemblance entre des séquences aléatoires prémémorisées dans une table et le spectre des signaux perturbants recueillis. Pour chaque symbole, la table est parcourue afin de minimiser l'erreur quadratique entre un vecteur représentatif des signaux perturbants et un vecteur estimé lu dans la table.

Selon une autre variante, l'estimation est basée sur une itération d'une fonction de coût de type Hubert.

Puis après la phase d'initialisation et négociation, le filtre numérique 85 extrait en permanence des N sorties du transformateur 43 la dégradation "D₁(t) à D_{K}(t)" due aux signaux perturbateurs x₁(t) à x_{K}(t) dans le signal perturbé reçu afin que cette dégradation soit appliquée aux N entrées inverses du circuit de soustraction 82 pour être soustraite au signal perturbé Y(t) en sortie du transformateur 43.

Bien que l'invention ait été décrite ci-dessus pour un signal perturbé ADSL et des signaux perturbateurs HDSL, elle est applicable à tout type de signal xDSL, qu'il soit perturbé ou perturbateur, et donc à toute la gamme des signaux xDSL tels que ADSL, IDSL (ISDN-like DSL) pour accès de base RNIS, HDSL, MDSL (Multitrate Symmetric DSL), RADSL (Rate Adaptation DSL), UDSL (Universal DSL), SDSL (Single DSL), et VDSL.

D'autre part, les transformateurs de Fourier 13 et 43 peuvent être relatifs à des transformations de Fourier discrètes inverse et directe DFT.

## Revendications

1. Procédé pour annuler des signaux perturbants (D₁ - D_{K}) émanant de signaux perturbateurs compris dans une bande de fréquence prédéterminée (BH), dans un signal perturbé à multiporteuse (y), **caractérisé en ce que**, au cours d'une phase d'initialisation, des signaux perturbants sont recueillis (E1) sur des porteuses (P₁ - P_{Q}) de sous-bandes de fréquence du signal perturbé comprises dans la bande de fréquence prédéterminée, les signaux perturbants étant recueillis ensemble sur chaque porteuse lorsqu'uniquement celle-ci ne supporte aucune donnée, des densités spectrales de puissance (DSP₁ - DSP_{Q}) des signaux recueillis sont calculées (E2), et un filtre numérique (85) est estimé (E4) en fonction d'un gabarit de fréquence déduit des densités spectrales calculées, et au cours d'une phase de communication de données, le signal perturbé (y) est filtré par ledit filtre pour y extraire des signaux perturbants qui sont soustraits au signal perturbé.

2. Procédé conforme à la revendication 1, selon lequel les signaux perturbants sont recueillis après que le signal perturbé à multiporteuse ait subi une transformée de Fourier numérique (43) dans une largeur de bande de fréquence (BD) recouvrant au moins la bande de fréquence (BH) des signaux perturbateurs.

3. Procédé conforme à la revendication 2, comprenant une interpolation (E3) de densités spectrales de puissance dans des sous-bandes de porteuse comprises dans la bande de fréquence (BD) du signal perturbé à multiporteuse et n'appartenant pas à la bande de fréquence prédéterminée (BH) des signaux perturbateurs, en fonction des densités spectrales calculées (DSP₁ - DSP_{Q}), afin d'estimer le filtre (85) en fonction des densités spectrales calculées et interpolées.

4. Récepteur (4) de modem recevant depuis une ligne de transmission (LU) un signal à multiporteuse (y) qui est perturbé par des signaux perturbants (D₁ - D_{K}) émanant de signaux perturbateurs (x₁ - x_{K}) compris dans une bande de fréquence prédéterminée (BH) et se propageant dans des lignes de transmission (L₁ - L_{K}) voisines de ladite ligne de transmission (LU), **caractérisé en ce qu'**il comprend un moyen (8) adapté pour annuler les signaux perturbants (D₁ - D_{K}) dans le signal perturbé à multiporteuse reçu (y) conformément aux étapes du procédé selon l'une des revendications 1 à 3.

5. Récepteur conforme à la revendication 4, dans lequel le moyen pour annuler (8) est interconnecté entre un transformateur de Fourier (43) du signal perturbé à multiporteuse reçu et un décodeur (41).

6. Récepteur conforme à la revendication 4 ou 5, dans lequel le moyen pour annuler (8) comprend un moyen (81) pour estimer un filtre numérique (85) en fonction d'un gabarit de fréquence déduit de densités spectrales (DSP₁ - DSP_{Q}) calculées pour des signaux perturbants recueillis sur des porteuses (P₁ - P_{Q}) de sous-bandes de fréquence du signal perturbé reçu au moins comprises dans la bande de fréquence prédéterminée (BH) pendant une phase d'initialisation du modem, et un moyen (82) pour soustraire des signaux perturbants extraits par ledit filtre (85) au signal perturbé (Y) pendant une phase de communication de données du modem.

## Patentansprüche

1. Verfahren zur Unterdrückung von Störsignalen (D₁ - D_{K}), ausgehend von Störsignalen, die in einem vordefinierten Frequenzband (BH) enthalten sind, in einem gestörten Vielträger-Frequenzmultiplexsignal (y), **dadurch gekennzeichnet, dass** die Störsignale im Verlauf der Initialisierungsphase in den Trägerfrequenzen (P₁ - P_{Q}) der Unterfrequenzbänder des gestörten Signals, das im vordefinierten Frequenzband enthalten ist, abgefangen werden (E1), wobei sämtliche Störsignale in jeder Trägerfrequenz nur dann abgefangen werden, wenn diese keinerlei Daten enthält, die Spektraldichten (DSP₁ - DSP_{Q}) der abgefangenen Signale werden berechnet (E2) und ein digitaler Filter (85) wird in Abhängigkeit von einem Frequenzprofil, das aus den berechneten Spektraldichten abgeleitet wird, ausgelegt (E4), und im Verlauf einer Datenkommunikationsphase wird das gestörte Signal (y) von dem genannten Filter gefiltert, um die Störsignale, die dem gestörten Signal entzogen werden, zu entfernen.

2. Verfahren gemäß Anspruch 1, demzufolge die Störsignale abgefangen werden, nachdem das gestörte Vielträger-Frequenzmultiplexsignal in einer Frequenzbandbreite (BD), die mindestens das Frequenzband (BH) der Störsignale abdeckt, einer digitalen Fourier-Transformation (43) unterzogen wurde.

3. Verfahren gemäß Anspruch 2, das außerdem eine Interpolation (E3) der Spektraldichten in den Trägerunterfrequenzen umfasst, die im Frequenzband (BD) des gestörten Vielträger-Frequenzmultiplexsignals enthalten sind, und die nicht zu dem vordefinierten Frequenzband (BH) der Störsignale gehören, in Abhängigkeit von den berechneten Spektraldichten (DSP₁ - DSP_{Q}), um den Filter (85) in Abhängigkeit von den berechneten und interpolierten Spektraldichten auszulegen.

4. Modemempfänger (4), der über eine Übertragungsleitung (LU) ein Vielträger-Frequenzmultiplexsignal (y) empfängt, das von Störsignalen (D₁ - D_{K}) gestört wird, die von Störsignalen (X₁ - X_{K}) ausgehen, die in einem vordefinierten Frequenzband (BH) enthalten sind und sich in den Übertragungsleitungen (L₁ - L_{K}), die an die genannte Übertragungsleitung (LU) angrenzen, ausbreiten, **dadurch gekennzeichnet, dass** es eine Vorrichtung (8) umfasst, die in der Lage ist, die Störsignale (D₁ - D_{K}) in dem empfangenen, gestörten Vielträger-Frequenzmultiplexsignal (y) entsprechend den Schritten des Verfahrens gemäß einem der Ansprüche 1 bis 3 zu unterdrücken.

5. Empfänger gemäß Anspruch 4, wobei die Vorrichtung zur Unterdrückung (8) zwischen einem Fourier-Transformator (43) für das empfangene, gestörte Vielträger-Frequenzmultiplexsignal und einem Decoder (41) angeschlossen ist.

6. Empfänger gemäß Anspruch 4 oder 5, wobei die Vorrichtung zur Unterdrückung (8) eine Vorrichtung (81) zur Auslegung eines digitalen Filters (85) in Abhängigkeit von einem Frequenzprofil umfasst, das von den Spektraldichten (DSP₁ - DSP_{Q}) abgeleitet wird, die für die Störsignale berechnet wurden, die in den Trägerfrequenzen (P₁ - P_{Q}) der Frequenzunterbänder des empfangenen, gestörten Signals abgefangen wurden, das während der Initialisierungsphase des Modems mindestens in dem vordefinierten Frequenzbereich (BH) enthalten ist, sowie eine Vorrichtung, um die Störsignale, die von dem genannten Filter (85) während der Datenkommunikationsphase des Modems aus dem gestörten Signal (y) entfernt wurden, abzufangen.

## Claims

1. Method for deleting disruptive signals (D_{1 -} Dₖ) emanating from disruptor signals included in a band of predetermined frequency (BH), in a disrupted multi-carrier (y) signal, **characterised in that**, during a phase of initialisation, disruptive signals are collected (E1) on the carriers (P₁ - P_{q}) of sub-frequency bands of the disrupted signal included in the predetermined frequency band, the disruptive signals being collected together on each carrier when individually that carrier is not carrying any data, the spectral densities of power (DSP₁ - DSP_{Q}) of the collected signals are calculated (E2), and a digital filter (85) is reckoned (E4) according to a frequency template deduced from the spectral densities calculated, and in the course of a phase of data communication, the disrupted signal (y) is filtered by the said filter to extract from it the disruptive signals which are removed from the disrupted signal.

2. Method according to claim 1, according to which the disruptive signals are collected after the disrupted multi-carrier signal has undergone a digital Fourier transform (43) in a bandwidth of frequency (BD) covering at least the frequency band of the disruptor signals

3. Method according to claim 2, including an interpolation (E3) of spectral densities of power in the carrier sub-bands included in the frequency band (BD) of the disrupted multi-carrier signal and not belonging to the predetermined frequency band (BH) of the disruptor signals, according to the calculated spectral densities (DSP₁ - DSP_{Q}) in order to reckon the filter (85) according to the calculated and interpolated spectral densities.

4. Receiver (4) on a modem receiving from a transmission line (LU) a multi - carrier signal (y) which is disrupted by disruptive signals (D₁ - D_{K}) emanating from disruptor signals (x₁ - x_{K}) contained in a pre-determined frequency band (BH) and produced in transmission lines (L₁ - L_{K}) neighbouring the said transmission line (LU). **characterised in that** it includes a means (8) adapted to delete disruptive signals (D₁ - D_{K}) in the disrupted multi-carrier signal received (y) in conformity with the stages of the method according to one of the claims 1 to 3.

5. Receiver according to claim 4, in which the means of deletion (8) is interconnected between a Fourier transformer (43) for the received disrupted multi-carrier signal and a decoder (41).

6. Receiver according to claim 4 or 5, in which the means of deletion (8) includes a means (81) for reckoning a digital filter (85) according to a frequency template deduced from the spectral densities (DSP₁ - DSP_{Q}) calculated for the disruptive signals collected on the carriers (P₁ - P_{Q}) of sub-bands of the frequency of the disrupted signal received at least contained within the predetermined frequency band (BH) in the course of a modem initialisation phase, and a means (82) for removing the disruptive signals extracted by the said filter (85) from the disrupted signal (Y) in the course of a modem phase of data communication.
